# EUROPÄISCHE PATENTSCHRIFT

(11) **EP 2 698 307 B1**
(45) Veröffentlichungstag und Bekanntmachung des Hinweises auf die Patenterteilung: **01.05.2019**
(21) Anmeldenummer: 13180353.8
(22) Anmeldetag: 14.08.2013
(51) Int. Cl.: B62D 57/028, B62D 61/12, B64G 1/00, B60P 1/02

(54) **Mobile Robotereinrichtung und Nutzlastmodul zur Verwendung mit einer mobilen Robotereinrichtung**
Mobile robot apparatus and payload module for use with a mobile robot device
Dispositif robotisé mobile et module de charge utile destiné à être utilisé avec un dispositif robotisé mobile

(30) Priorität: 16.08.2012 DE 102012214561
(43) Veröffentlichungstag der Anmeldung: 19.02.2014
(73) Patentinhaber: Deutsches Zentrum für Luft- und Raumfahrt e.V., 51147 Köln (DE)
(72) Erfinder: Wedler, Dr. Armin, 80636 München (DE)
(74) Vertreter: Ege Lee & Partner Patentanwälte PartGmbB

(56) Entgegenhaltungen:
- WO-A1-85/02361
- US-A- 4 932 491
- US-A- 5 351 773
- US-A- 5 515 934

## Beschreibung

Die Erfindung betrifft eine Mobile Robotereinrichtung aufweisend ein Chassis und wenigstens einen Aktuator zur Bewegung des Chassis, wobei mithilfe des Chassis ein Nutzlastmodul aufnehmbar und/oder absetzbar und mithilfe des wenigstens einen Aktuators das Chassis zum Aufnehmen und/oder Absetzen des Nutzlastmoduls bewegbar ist, sowie ein Nutzlastmodul zur Verwendung mit einer mobilen Robotereinrichtung.

Aus der US 4,932,491 A ist ein geländegängiges Landfahrzeug bekannt das umfasst ein Chassis mit einem vorderen und einem hinteren Bereich und seitlich beabstandet gegenüberliegenden Seiten, einem Paar vorderer primärer Räder an jeder Seite des Chassis, einem Paar hinterer primärer Räder an jeder Seite des Chassis, wobei die primären Räder an dem Chassis um parallele seitliche Achsen drehbar befestigt sind, bei dem eine Verbesserung umfasst: ein Paar Hilfsarme jeweils mit einem inneren Ende, das um eine Arm-Achse schwenkbar an dem Chassis befestigt ist, und jeweils mit einem äußeren Ende, wobei die Arme an entgegengesetzten Seiten des Chassis befestigt sind; ein Paar Hilfsräder, die an den äußeren Enden der Arme befestigt sind; mit den Armen gekoppelte Mittel, um diese um ihre inneren Enden zu schwenken; die Arme aufweisend eine Länge, um die Hilfsräder derart zu bewegen, dass jedes mittig zwischen den vorderen und hinteren primären Rädern auf der korrespondierenden Seite des Chassis liegt; Motor-Mittel zum Schwenken der Arme in erste Positionen zum Bewegen der Hilfsräder in erste Positionen, in denen sie gegen einen Untergrund und zwischen den vorderen und hinteren primären Rädern liegen, und zum Bewegen der Arme in Verstau-Positionen, in denen die Hilfsräder oberhalb des Untergrunds und zwischen den vorderen und hinteren primären Rädern liegen.

Aus der DE 10 2010 001 112 A1 ist ein Raumfahrt-Nutzlastmodul bekannt mit einem Haltebereich zur Ausbildung einer Halteverbindung im Inneren eines Raumfahrt-Flugkörper, bei dem an der Mantelfläche des Raumfahrt-Nutzlastmoduls mindestens ein sich um die Mantelfläche des Raumfahrt-Nutzlastmoduls erstreckender Rollkörper mit kreisförmigem Außenquerschnitt vorgesehen ist, sodass das Raumfahrt-Nutzlastmodul unter Abwälzen des mindestens einen Rollkörpers auf einer Oberfläche eines Himmelskörpers über diesen gerollt werden kann.

Aus der US 5,515,934 A ist ein mobiler Roboter bekannt mit einem Roboterkörper umfassend ein rechteckförmiges Kernmodul und daran angeordnete Schalenmodule, daran gelenkig angeordneten Beinen mit Rädern, einem Motor und einer horizontalen Zentralwelleneinrichtung. Die Zentralwelleneinrichtung stellt auch Mittel bereit, eine Höhe und einen Winkel des Roboterkörpers einzustellen, um eine Ausrichtung zu einem Arbeitsmodul zu ermöglichen. Arbeitsmodule können zum staubsaugen, rasenmähen, Boden wischen, Boden polieren oder für andere passende Aufgaben ausgelegt sein. Das Schalenmodul und das Arbeitsmodul greifen ineinander. Dazu weist das Schalenmodul zwei Aufnahmen und das Arbeitsmodul zwei Stangen auf. Die Aufnahmen und die Stangen sind elektrisch leitend. Das Schalenmodul weist einen Verriegelungshaken und das Arbeitsmodul weist eine zugehörige Segmentkappe auf.

Der Erfindung liegt die Aufgabe zugrunde, eine eingangs genannte Robotereinrichtung sowie ein eingangs genanntes Nutzlastmodul baulich und/oder funktional zu verbessern. Insbesondere soll ein Nutzlastmodul mit dem Chassis unmittelbar aufnehmbar und/oder absetzbar sein. Insbesondere soll die Robotereinrichtung baulich vereinfacht sein. Insbesondere soll ein Aufnehmen und/oder Absetzen eines Nutzlastmoduls vereinfacht sein. Insbesondere soll eine Prozesssicherheit bei einem Aufnehmen und/oder Absetzen eines Nutzlastmoduls erhöht sein. Insbesondere sollen die Robotereinrichtung und/oder das Nutzlastmodul standardisierbar sein. Insbesondere soll eine projektübergreifende Verwendung der Robotereinrichtung und/oder des Nutzlastmoduls ermöglicht sein.

Die Lösung der Aufgabe erfolgt mit einer mobilen Robotereinrichtung aufweisend ein Chassis und wenigstens einen Aktuator zur Bewegung des Chassis, wobei mithilfe des Chassis ein Nutzlastmodul aufhehmbar und/oder absetzbar und mithilfe des wenigstens einen Aktuators das Chassis zum Aufnehmen und/oder Absetzen des Nutzlastmoduls bewegbar ist, wobei das Chassis eine U-artige Form mit einem Rückenabschnitt und zwei Schenkelabschnitten aufweist und der Rückenabschnitt und die Schenkelabschnitte eine Aufnahme für das Nutzlastmodul bilden und das Chassis eine Linearführung zur Aufnahme des Nutzlastmoduls aufweist.

Die Robotereinrichtung kann für die Raumfahrt geeignet sein. Die Robotereinrichtung kann für einen extraterrestrischen Einsatz geeignet sein. Die Robotereinrichtung kann für einen Einsatz auf dem Erdmond geeignet sein. Die Robotereinrichtung kann für einen Einsatz auf dem Mars geeignet sein. Die Robotereinrichtung kann ein Rover sein. Die Robotereinrichtung kann ein Landfahrzeug sein. Dabei ist die Antriebsart oder die Verwendung für die Einordnung als "Landfahrzeug" ohne Belang. Die Robotereinrichtung kann ein Geländeahrzeug sein. Die Robotereinrichtung kann zur Bewegung in schwierigem Gelände abseits befestigter Straßen geeignet sein. Die Robotereinrichtung kann dazu dient, fremde Himmelskörper zu erkunden. Die Robotereinrichtung kann für einen terrestrischen Einsatz geeignet sein. Die Robotereinrichtung kann für einen Einsatz in einem für Menschen gefährlichen Umfeld geeignet sein.

Die Robotereinrichtung kann autonom mobil sein. Die Robotereinrichtung kann fernsteuerbar mobil sein. Die Robotereinrichtung kann geeignet sein, sich in ihrer Umgebung selbstständig zu bewegen und zu agieren. Die Robotereinrichtung kann insofern unabhängig sein. Die Robotereinrichtung kann eine Software, eine Elektronik und/oder eine Hardware zur Steuerung aufweisen. Die Robotereinrichtung kann eine Energieversorgung aufweisen. Die Robotereinrichtung kann in einer vorbestimmten Umgebung zumindest annähernd frei bewegbar sein. Der wenigstens eine Aktuator kann der vorbestimmten Umgebung angepasst sein. Die Robotereinrichtung kann fahrbar sein. Die Robotereinrichtung kann alternativ oder zusätzlich ein Laufroboter sein. Das Chassis kann mechanisch tragende Komponenten der Robotereinrichtung aufweisen. Das Chassis kann ein Gestell, ein Gehäuse, ein Skelett, eine Montageplatte und/oder eine Grundplatte aufweisen. Das Chassis kann einen Zentralkörper der Robotereinrichtung bilden.

Das Chassis kann bezogen auf ein orthogonales dreidimensionales Koordinatensystem in sechs Freiheitsgraden bewegbar sein. Das Koordinatensystem kann eine x-Achse, eine y-Achse und eine z-Achse aufweisen. Die x-Achse, die y-Achse und die z-Achse können zueinander jeweils orthogonal angeordnet sein. Die Freiheitsgrade können drei Translationen in Erstreckungsrichtung der Achsen des Koordinatensystems und drei Rotationen um die Achsen des Koordinatensystems sein. Das Chassis kann in einem dreidimensionalen Raum mithilfe des wenigstens einen Aktuators begrenzt frei bewegbar sein. Damit ist das Chassis zum Aufnehmen und/oder Absetzen eines Nutzlastmoduls positionierbar und/oder ausrichtbar. Ein Nutzlastmodul kann aufgenommen und/oder abgesetzt werden. Ein Nutzlastmodul kann transportiert werden.

Das Chassis kann zum Aufnehmen und/oder Absetzen des Nutzlastmoduls zunächst positionierbar und/oder ausrichtbar und nachfolgend kann das Nutzlastmodul durch eine zumindest annähernd lineare Bewegung des Chassis aufnehmbar und/oder absetzbar sein. Ein Positionieren und/oder Ausrichten des Chassis kann durch eine räumliche Bewegung erfolgen. Ein Positionieren und/oder Ausrichten des Chassis kann durch Bewegung in bis zu sechs Freiheitsgraden erfolgen. Eine lineare Bewegung kann eine Translation sein. Ein Aufnehmen und/oder Absetzen des Nutzlastmoduls kann durch eine zumindest annähernd lineare Bewegung in einer zur Aufstell- oder Absetzfläche der Nutzlastmoduls zumindest annähernd parallelen Ebene erfolgen. Ein Aufnehmen und/oder Absetzen des Nutzlastmoduls kann durch eine zumindest annähernd lineare Bewegung in einer zur Aufstell- oder Absetzfläche der Nutzlastmoduls zumindest annähernd senkrechten Ebene erfolgen. Zum Aufnehmen und/oder Absetzen des Nutzlastmoduls muss das Chassis nicht verändert, beispielsweise geteilt, werden. Das Chassis braucht nicht modular ausgeführt sein. Das Chassis kann monolithartig ausgeführt sein. Das Chassis weist eine erhöhte Stabilität auf. Die Linearführung kann eine Gleitführung sein. Die Linearführung des Chassis kann ein Führungselement einer mehrteiligen Führungseinrichtung sein. Die Linearführung des Chassis kann eine nutartige Form aufweisen. Die Linearführung des Chassis kann eine federartige Form aufweisen. Die Linearführung des Chassis kann eine schienenartige Form aufweisen. Die Linearführung des Chassis kann eine profilartige Form aufweisen. Die Linearführung des Chassis kann einen Anschlag aufweisen. Die Linearführung des Chassis kann eine Einführhilfe aufweisen. Damit ist Aufnehmen und/oder Absetzen des Nutzlastmoduls vereinfacht. Das Nutzlastmodul ist sicher aufnehmbar und/oder absetzbar.

Das Chassis kann eine Verriegelungseinrichtung zur Festlegung eines aufgenommenen Nutzlastmoduls aufweisen. Mithilfe der Verriegelungseinrichtung kann das Nutzlastmodul lösbar festlegbar sein. Mithilfe der Verriegelungseinrichtung kann das Nutzlastmodul formschlüssig festlegbar sein. Mithilfe der Verriegelungseinrichtung kann das Nutzlastmodul kraftschlüssig, insbesondere reibschlüssig, festlegbar sein. Damit ist ein aufgenommenes Nutzlastmodul sicher an dem Chassis festlegbar.

Das Chassis kann eine elektrische, mechanische, thermische und/oder Daten-Schnittstelle zur Verbindung mit dem Nutzlastmodul aufweisen. Die Schnittstelle kann zur Versorgung des Nutzlastmoduls dienen. Die Schnittstelle kann zur Entsorgung des Nutzlastmoduls dienen. Die Schnittstelle kann zur Beladung des Nutzlastmoduls dienen. Die Schnittstelle kann zur Entladung des Nutzlastmoduls dienen. Die Schnittstelle kann zum Datenaustausch mit dem Nutzlastmodul dienen. Die Schnittstelle und die Verriegelungseinrichtung können baulich vereinigt sein. Die Schnittstelle und die Verriegelungseinrichtung können baulich getrennt sein.

Der wenigstens eine Aktuator kann wenigstens ein antreibbares Rad aufweisen, das mit dem Chassis kinematisch verbunden ist. Der wenigstens eine Aktuator kann ein einziges Rad aufweisen. Der wenigstens eine Aktuator kann zwei Räder aufweisen. Der wenigstens eine Aktuator kann mehrere Räder aufweisen. Das wenigstens eine Rad kann lenkbar sein. Der wenigstens eine Aktuator kann einen Motor aufweisen. Der wenigstens eine Aktuator kann eine Bremse aufweisen. Der wenigstens eine Aktuator kann ein Getriebe aufweisen.

Der wenigstens eine Aktuator kann beinartig mit wenigstens zwei Gelenken ausgeführt sein. Der wenigstens eine Aktuator kann beinartig mit genau zwei Gelenken ausgeführt sein. Der wenigstens eine Aktuator kann zwei Enden aufweisen. Der wenigstens eine Aktuator kann mit einem Ende an dem Chassis angeordnet sein. Der wenigstens eine Aktuator kann an dem Chassis starr angeordnet sein. Der wenigstens eine Aktuator kann an dem Chassis gelenkig angeordnet sein. Ein Ende kann ein freies Ende sein. Das wenigstens eine antreibbare Rad kann an dem freien Ende angeordnet sein. Die wenigstens zwei Gelenke können zwischen den zwei Enden angeordnet sein. Wenigstens ein Gelenk kann ein Drehgelenk sein. Wenigstens ein Gelenk kann ein Kreuzgelenk sein. Wenigstens ein Gelenk kann ein Kugelgelenk sein. Damit ist das freie Ende des wenigstens einen Aktuators relativ zu dem Chassis bewegbar.

Außerdem wird die der Erfindung zugrundeliegende Aufgabe gelöst mit einem Nutzlastmodul zur Verwendung mit einer derartigen Robotereinrichtung, wobei das Nutzlastmodul eine mit der Linearführung des Chassis korrespondierende Linearführung aufweist und das Nutzlastmodul damit durch eine zumindest annähernd lineare Bewegung der Robotereinrichtung in der Aufnahme des Chassis aufnehmbar und/oder aus der Aufnahme des Chassis absetzbar ist. Das Nutzlastmodul kann eine containerartige Form aufweisen. Das Nutzlastmodul kann eine quaderartige Form aufweisen. Das Nutzlastmodul kann eine zumindest annähernd ebene Aufstellfläche aufweisen. Das Nutzlastmodul kann eine Unterseite aufweisen. Die Unterseite kann die Aufstellfläche bilden. Das Nutzlastmodul kann Seiten aufweisen. Das Nutzlastmodul kann eine Oberseite aufweisen. Jeweils zwei einander gegenüberliegende Seiten können zueinander zumindest annähernd parallel angeordnet sein. Die Unterseite und die Oberseite können zueinander zumindest annähernd parallel angeordnet sein. Das Nutzlastmodul kann zur Koppelung mit weiteren, insbesondere identischen, Nutzlastmodulen geeignet sein. Das Nutzlastmodul kann stapelbar sein.

Die Linearführung des Nutzlastmoduls kann ein Führungselement einer mehrteiligen Führungseinrichtung sein. Die Linearführung des Nutzlastmoduls kann eine nutartige Form aufweisen. Die Linearführung des Nutzlastmoduls kann eine federartige Form aufweisen. Die Linearführung des Nutzlastmoduls kann eine schienenartige Form aufweisen. Die Linearführung des Nutzlastmoduls kann eine profilartige Form aufweisen. Die Linearführung des Nutzlastmoduls kann einen Anschlag aufweisen. Die Linearführung des Nutzlastmoduls kann eine Einführhilfe aufweisen. Damit ist Aufnehmen und/oder Absetzen des Nutzlastmoduls vereinfacht. Das Nutzlastmodul ist sicher aufnehmbar und/oder absetzbar.

Das Nutzlastmodul kann eine mit der Verriegelungseinrichtung der Robotereinrichtung korrespondierende Verriegelungseinrichtung aufweisen. Mithilfe der Verriegelungseinrichtung kann das Nutzlastmodul an der Robotereinrichtung lösbar festlegbar sein. Mithilfe der Verriegelungseinrichtung kann das Nutzlastmodul formschlüssig festlegbar sein. Mithilfe der Verriegelungseinrichtung kann das Nutzlastmodul kraftschlüssig, insbesondere reibschlüssig, festlegbar sein. Damit ist ein aufgenommenes Nutzlastmodul sicher an der Robotereinrichtung festlegbar.

Das Nutzlastmodul kann eine mit der elektrischen, mechanischen, thermischen und/oder Daten-Schnittstelle der Robotereinrichtung korrespondierende elektrische, mechanische, thermische und/oder Daten-Schnittstelle aufweisen. Die Schnittstelle kann zur Versorgung des Nutzlastmoduls dienen. Die Schnittstelle kann zur Entsorgung des Nutzlastmoduls dienen. Die Schnittstelle kann zur Beladung des Nutzlastmoduls dienen. Die Schnittstelle kann zur Entladung des Nutzlastmoduls dienen. Die Schnittstelle kann zum Datenaustausch mit der Robotereinrichtung und/oder einem anderen Nutzlastmodul dienen. Die Schnittstelle und die Verriegelungseinrichtung können baulich vereinigt sein. Die Schnittstelle und die Verriegelungseinrichtung können baulich getrennt sein.

Das Nutzlastmodul kann standardisiert sein. Das Nutzlastmodul kann eine standardisierte Linearführung, eine standardisierte Verriegelungseinrichtung und/oder eine standardisierte elektrische, mechanische, thermische und/oder Daten-Schnittstelle aufweisen.

Das Nutzlastmodul kann zur Durchführung wissenschaftlicher Experimente dienen. Das Nutzlastmodul kann zur Energieversorgung dienen. Das Nutzlastmodul kann zur Kommunikation dienen.

Zusammenfassend und mit anderen Worten dargestellt ergibt sich somit durch die Erfindung unter anderem ein Rover zur Positionierung und Aufnahme modularer Transportboxen zum Einsatz auf planetaren Oberflächen. Ein mobiler Roboter kann in der Lage sein, durch ein genaues Positionieren eines Zentralkörpers vordefinierte Ladeboxen (Payloadelemente) aufzunehmen und zu positionieren. Ein Fahrzeug kann z. B. mit Toolschnittstellen eine Ladung aufnehmen und positionieren. Das Fahrzeug kann aufgrund seiner Kinematik so ausgeführt sein, dass sich das Fahrzeug in einer bestimmten Bewegungsprozedur mit einer Ladebox verbindet. Hierzu kann ein Arretierungsmechanismus zum Einsatz kommen. Die Ladeboxen können normiert sein. Die Ladeboxen können verschiedenste Aufgaben und Ziele erfüllen. Die Ladeboxen können individuell bestückbar sein. Damit kann eine Austauschbarkeit von Instrumenten gewährleistet sein. Eine robotisch mobile Plattform kann durch Körperbewegung verschiedene Transportboxen aufnehmen. Die Transportboxen können verschiedene wissenschaftliche Experimente, Energieversorgung, Kommunikation etc. beinhalten. Das Aufnehmen der Transportboxen kann durch die Körperbewegung des robotischen Systems erfolgen. Modulare Payloadboxen können verschieden ausgestaltet sein und können eine normierte Greif- bzw. Aufnahmeschnittstelle haben. Die Boxen können nach einer selbständigen Aufnahme durch das robotische System mit dem System selbst verriegelbar sein. Ein Verriegelungsmechanismus kann eine elektrische, informationstechnische und thermische Schnittstelle bieten.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Rover mit einem Zentralkörper und vier Beinen in Draufsicht,
- Fig. 2: einen Rover mit einem Zentralkörper und vier Beinen in Seitenansicht,
- Fig. 3: kinematische Beinstellungen eines Rovers und
- Fig. 4: Lenkposen und Winkel eines Rovers.

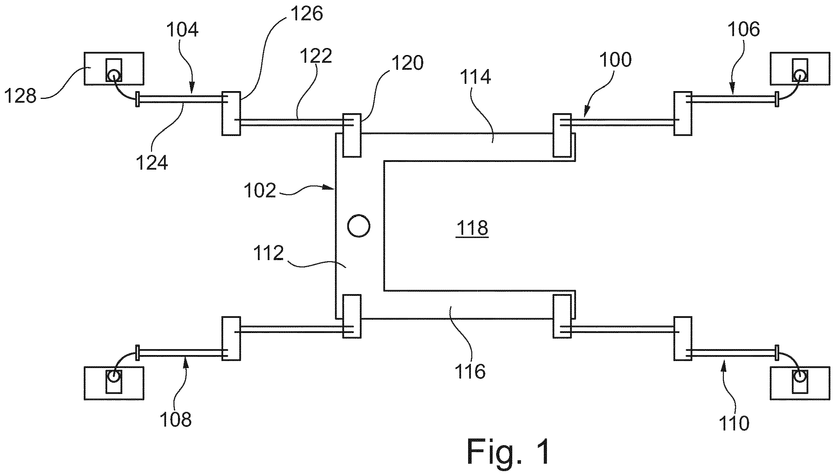

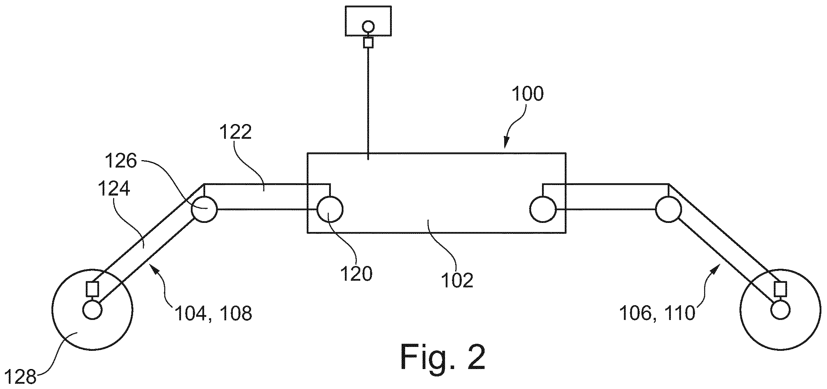

Fig. 1 zeigt einen Rover 100 mit einem Zentralkörper 102 und vier Beinen 104, 106, 108, 110 in Draufsicht. Fig. 2 zeigt den Rover 100 in Seitenansicht. Der Rover 100 dient insbesondere als Planeten-Rover zur Erkundung fremder Himmelskörper.

Der Zentralkörper 102 weist eine in Draufsicht U-artige Form mit einem Rückenabschnitt 112 und zwei Schenkelabschnitten 114, 116 auf. Der Rückenabschnitt 112 und die Schenkelabschnitte 114, 116 bilden eine Aufnahme 118 für ein Nutzlastmodul. Der Zentralkörper 102 weist vier Eckabschnitte auf. Die Beine 104, 106, 108, 110 sind an den Eckabschnitten des Zentralkörpers 102 angeordnet.

Die Beine 104, 106, 108, 110 weisen jeweils ein erstes Ende auf, mit dem sie mit dem Zentralkörper 102 verbunden sind. Die Beine 104, 106, 108, 110 sind mit dem Zentralkörper 102 mithilfe von Gelenken, wie 120, verbunden. Die Gelenke 120 sind jeweils als Drehgelenk ausgeführt. Damit ist jeweils ein Verschwenken der Beine 104, 106, 108, 110 um eine Drehachse ermöglicht. Die Gelenke 120 weisen jeweils einen Antrieb auf. Die Gelenke 120 weisen jeweils ein Getriebe auf. Die Gelenke 120 bilden jeweils ein schulterartiges Gelenk. Die Gelenke 120 ermöglichen jeweils ein Einklappen der Beine 104, 106, 108, 110 an den Zentralkörper 102.

Die Beine 104, 106, 108, 110 weisen jeweils zwei Schenkel, wie 122, 124, auf. Die Schenkel 122 sind jeweils dem Zentralkörper 102 zugeordnet. Die Schenkel 122, 124 eines Beins 104, 106, 108, 110 sind jeweils mithilfe eines Gelenks, wie 126, miteinander verbunden. Die Gelenke 126 sind jeweils als Drehgelenk ausgeführt. Damit ist jeweils ein Verschwenken der Schenkel 122, 124 zueinander um eine Drehachse ermöglicht. Die Gelenke 126 weisen jeweils einen Antrieb auf. Die Gelenke 126 weisen jeweils ein Getriebe auf. Die Gelenke 126 bilden jeweils ein knieartiges Gelenk. Die Gelenke 120 ermöglichen jeweils ein Einklappen der Beine 104, 106, 108, 110 an den Zentralkörper 102. Die Gelenke 120 ermöglichen jeweils ein Einklappen der Schenkel 122, 124 aneinander.

Die Drehachsen der Gelenke 120, 126 sind jeweils zueinander parallel angeordnet. Die Drehachsen der Gelenke 120, 126 sind jeweils senkrecht zur Erstreckungsrichtung der Schenkelabschnitte 114, 116 des Zentralkörpers 102 angeordnet. Die Schenkel 122 sind von den Schenkelabschnitten 114, 116 des Zentralkörpers 102 in Erstreckungsrichtung der Drehachsen der Gelenke 120 derart beabstandet angeordnet, dass ein ungehindertes Verschwenken ermöglicht ist. Die Schenkel 124 sind von den Schenkeln 122 in Erstreckungsrichtung der Drehachsen der Gelenke 126 derart beabstandet angeordnet, dass ein ungehindertes Verschwenken ermöglicht ist. Die Schenkel 122, 124 weisen jeweils parallelogrammartig angeordnete Streben auf.

Die Beine 104, 106, 108, 110 weisen jeweils ein zweites freies Ende auf. Der Rover 100 weist vier Räder, wie 128, auf. Die Schenkel 124 sind jeweils einem Rad 128 zugeordnet. Die Räder 128 sind jeweils an den freien Enden der Beine 104, 106, 108, 110 angeordnet. Die Räder 128 sind jeweils antreibbar. Die Räder 128 sind jeweils lenkbar. Die Räder 128 sind von den Schenkeln 124 derart beabstandet angeordnet, dass ein ungehindertes Verschwenken der Schenkel 124 sowie Lenken der Räder 128 ermöglicht ist. Der Rover 100 weist eine Betriebssensorik auf. Die Betriebssensorik dient zur dynamischen Bewegungsregelung des Rovers 100.

Der Rover 100 weist eine Linearführung zum Aufnehmen eines Nutzlastmoduls in der Aufnahme 118 auf. Die Linearführung ist an den Schenkelabschnitten 114, 116 des Zentralkörpers 102 angeordnet. Der Rover 100 weist eine Verriegelungseinrichtung zur Festlegung eines aufgenommenen Nutzlastmoduls auf. Die Verriegelungseinrichtung dient auch als Schnittstelle für Übertragungen zwischen dem Rover 100 und dem Nutzlastmodul. Die Verriegelungseinrichtung ist an dem Rückenabschnitt 112 des Zentralkörpers 102 angeordnet.

Ein vorliegend nicht dargestelltes Nutzlastmodul weist eine containerartige Form mit einer Unterseite, einer Oberseite und vier Seiten auf. Die Unterseite bildet eine Aufstellfläche des Nutzlastmoduls. Das Nutzlastmodul weist eine Linearführung zur Aufnahme durch einen Rover, wie Rover 100 gemäß Fig. 1 und Fig. 2, auf. Die Linearführung ist an zwei einander gegenüberliegenden Seiten des Nutzlastmoduls angeordnet. Das Nutzlastmodul weist eine Verriegelungseinrichtung zur Verriegelung mit dem Rover auf. Die Verriegelungseinrichtung ist an einer Seite des Nutzlastmoduls angeordnet.

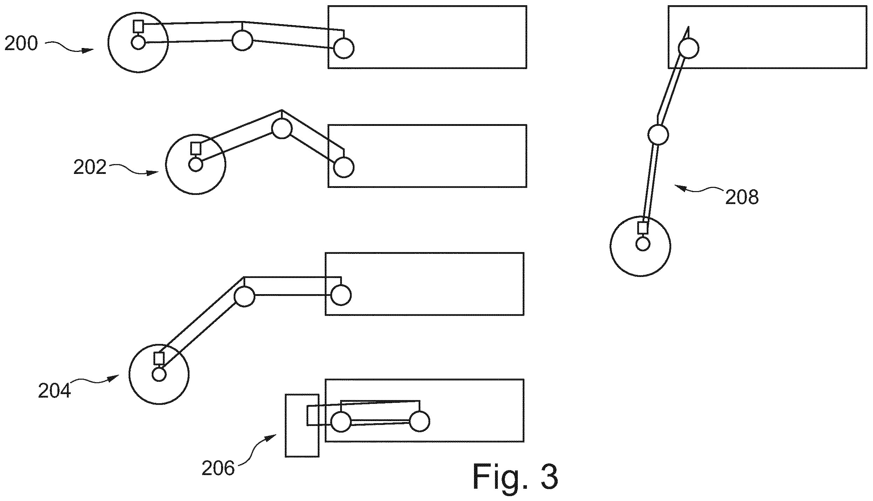

Fig. 3 zeigt kinematische Beinstellungen 200, 202, 204, 206, 208 eines Rovers, wie Rover 100 gemäß Fig. 1 und Fig. 2. Die Beinstellung 200 ist eine seitlich ausgestreckte Beinstellung. In der Beinstellung 200 sind die Schenkel des Beins in etwa in Erstreckungsrichtung des Schenkelabschnitts des Zentralkörpers gerichtet. Das zwischen den Schenkeln angeordnete Gelenk ist in etwa gestreckt. Das Rad ist in etwa auf Höhe des Zentralkörpers angeordnet. Die Beinstellung 202 zeigt einen Schrittvorgang. In der Beinstellung 202 ist das Bein angewinkelt. Das zwischen den Schenkeln angeordnete Gelenk ist angewinkelt. Das zwischen den Schenkeln angeordnete Gelenk ist in etwa auf Höhe einer Oberseite des Zentralkörpers angeordnet. Das Rad ist in etwa auf Höhe des Zentralkörpers angeordnet. Die Beinstellung 204 zeigt eine Beinstellung bei stehendem Rover. Diese Beinstellung 204 ist eine Normal-Beinstellung. Das zwischen den Schenkeln angeordnete Gelenk ist angewinkelt. Der dem Zentralkörper zugeordnete Schenkel des Beins ist in Verlängerung zu dem Schenkelabschnitt des Zentralkörpers angeordnet. Das Rad ist niedriger als der Zentralkörper angeordnet. Die Beinstellung 206 ist eine eingefaltete Beinstellung. In der Beinstellung 208 sind die Schenkel des Beins an dem Schenkelabschnitt des Zentralkörpers angelegt. Das Rad ist an den Zentralkörper angelegt. Die Beinstellung 208 ist eine flamingoartig ausgestreckte Beinstellung. In der Beinstellung 208 sind die Schenkel des Beins in etwa senkrecht zur Erstreckungsrichtung des Schenkelabschnitts des Zentralkörpers gerichtet. Das zwischen den Schenkeln angeordnete Gelenk ist in etwa gestreckt. Das Rad ist unterhalb des Zentralkörpers angeordnet. Im Übrigen wird ergänzend insbesondere auf Fig. 1 und 2 sowie die zugehörige Beschreibung verwiesen.

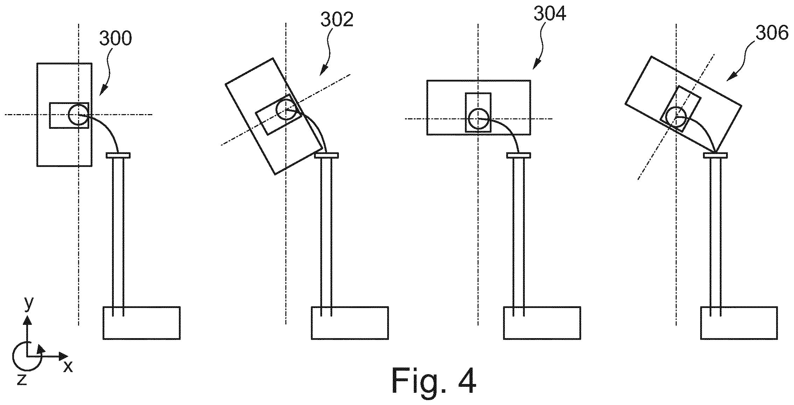

Fig. 4 zeigt Lenkposen 300, 302, 304, 306 und Winkel eines Rovers, wie Rover 100 gemäß Fig. 1 und Fig. 2. Zum Lenken ist das Rad um die in Fig. 4 dargestellte z-Achse drehbar. In der Lenkpose 300 weist das Rad eine Laufrichtung auf, die mit der Erstreckungsrichtung des Schenkelabschnitts des Zentralkörpers einen Winkel von 0° einschließt. Damit ist dem Rover ermöglicht, in Erstreckungsrichtung der in Fig. 4 dargestellten y-Achse vorwärts oder rückwärts zu fahren. In der Lenkpose 302 weist das Rad eine Laufrichtung auf, die mit der Erstreckungsrichtung des Schenkelabschnitts des Zentralkörpers einen Winkel von beispielsweise 30° einschließt. Damit ist dem Rover ermöglicht, schräg vorwärts oder rückwärts zu fahren bzw. zu lenken. In der Lenkpose 304 weist das Rad eine Laufrichtung auf, die mit der Erstreckungsrichtung des Schenkelabschnitts des Zentralkörpers einen Winkel von -90° einschließt. Damit ist dem Rover ermöglicht, in Erstreckungsrichtung der in Fig. 4 dargestellten x-Achse seitwärts zu fahren. In der Lenkpose 306 weist das Rad eine Laufrichtung auf, die mit der Erstreckungsrichtung des Schenkelabschnitts des Zentralkörpers einen Winkel von beispielsweise -120° einschließt. Damit ist dem Rover ermöglicht, schräg seitwärts zu fahren bzw. zu lenken. Das Rad ist über einem Winkelbereich von ca. 150° lenkbar. Zum Lenken des Rads ist ein Lenkaktuator vorgesehen. Im Übrigen wird ergänzend insbesondere auf Fig. 1 und 2 sowie die zugehörige Beschreibung verwiesen.

Zum Aufnehmen eines Nutzlastmoduls wird der Rover 100 zunächst bezüglich des Nutzlastmoduls vorbestimmt positioniert. Dabei wird der Zentralkörper 102 des Rovers 100 zu einer Unterseite des Nutzlastmoduls parallel ausgerichtet und es erfolgt eine derartige Ausrichtung des Rovers in einer zur Unterseite des Nutzlastmoduls parallelen Ebene, dass die Linearführungen des Rovers 100 und des Nutzlastmoduls gefügt werden können. Nachfolgend wird das Nutzlastmodul durch eine waagerechte lineare Bewegung des Rovers 100 aufgenommen. Dabei werden die Linearführungen des Rovers 100 und des Nutzlastmoduls gefügt. Das Nutzlastmodul wird an dem Rover 100 verriegelt und kann dann transportiert werden. Ein Absetzten des Nutzlastmoduls erfolgt entsprechend.

### Bezugszeichenliste

- 100: Rover
- 102: Zentralkörper
- 104: Bein
- 106: Bein
- 108: Bein
- 110: Bein
- 112: Rückenabschnitt
- 114: Schenkelabschnitt
- 116: Schenkelabschnitt
- 118: Aufnahme
- 120: Gelenk
- 122: Schenkel
- 124: Schenkel
- 126: Gelenk
- 128: Rad

- 200: Beinstellung
- 202: Beinstellung
- 204: Beinstellung
- 206: Beinstellung
- 208: Beinstellung

- 300: Lenkpose
- 302: Lenkpose
- 304: Lenkpose
- 306: Lenkpose

## Patentansprüche

1. Mobile Robotereinrichtung (100) aufweisend ein Chassis und wenigstens einen Aktuator (104, 106, 108, 110) zur Bewegung des Chassis, wobei mithilfe des Chassis ein Nutzlastmodul aufnehmbar und/oder absetzbar und mithilfe des wenigstens einen Aktuators (104, 106, 108, 110) das Chassis zum Aufnehmen und/oder Absetzen des Nutzlastmoduls bewegbar ist, **dadurch gekennzeichnet, dass** das Chassis einen Zentralkörper (102) der Robotereinrichtung (100) bildet, der Zentralkörper (102) eine in Draufsicht U-artige Form mit einem Rückenabschnitt (112) und zwei Schenkelabschnitten (114, 116) aufweist, der Rückenabschnitt (112) und die Schenkelabschnitte (114, 116) eine Aufnahme (118) für das Nutzlastmodul bilden und das Chassis eine Linearführung zur Aufnahme des Nutzlastmoduls aufweist.

2. Robotereinrichtung (100) nach Anspruch 1, **dadurch gekennzeichnet, dass** das Chassis bezogen auf ein orthogonales dreidimensionales Koordinatensystem in sechs Freiheitsgraden bewegbar ist.

3. Robotereinrichtung (100) nach wenigstens einem der vorhergehenden Ansprüche, **dadurch gekennzeichnet, dass** das Chassis zum Aufnehmen und/oder Absetzen des Nutzlastmoduls zunächst positionierbar und/oder ausrichtbar und nachfolgend das Nutzlastmodul durch eine zumindest annähernd lineare Bewegung des Chassis aufnehmbar und/oder absetzbar ist.

4. Robotereinrichtung (100) nach wenigstens einem der vorhergehenden Ansprüche, **dadurch gekennzeichnet, dass** das Chassis eine Verriegelungseinrichtung zur Festlegung eines aufgenommenen Nutzlastmoduls aufweist.

5. Robotereinrichtung (100) nach wenigstens einem der vorhergehenden Ansprüche, **dadurch gekennzeichnet, dass** das Chassis eine elektrische, mechanische, thermische und/oder Daten-Schnittstelle zur Verbindung mit dem Nutzlastmodul aufweist.

6. Robotereinrichtung (100) nach wenigstens einem der vorhergehenden Ansprüche, **dadurch gekennzeichnet, dass** der wenigstens eine Aktuator (104, 106, 108, 110) wenigstens ein antreibbares Rad (128) aufweist, das mit dem Chassis kinematisch verbunden ist.

7. Robotereinrichtung (100) nach wenigstens einem der vorhergehenden Ansprüche, **dadurch gekennzeichnet, dass** der wenigstens eine Aktuator (104, 106, 108, 110) beinartig mit wenigstens zwei Gelenken (120, 126) ausgeführt ist.

8. Nutzlastmodul zur Verwendung mit einer Robotereinrichtung (100) nach wenigstens einem der vorhergehenden Ansprüche, **dadurch gekennzeichnet, dass** das Nutzlastmodul eine mit der Linearführung des Chassis korrespondierende Linearführung aufweist und das Nutzlastmodul damit durch eine zumindest annähernd lineare Bewegung der Robotereinrichtung (100) in der Aufnahme (118) des Chassis aufnehmbar und/oder aus der Aufnahme (118) des Chassis absetzbar ist.

9. Nutzlastmodul nach Anspruch 8, **dadurch gekennzeichnet, dass** das Nutzlastmodul eine mit der Verriegelungseinrichtung der Robotereinrichtung (100) korrespondierende Verriegelungseinrichtung aufweist.

10. Nutzlastmodul nach wenigstens einem der Ansprüche 8-9, **dadurch gekennzeichnet, dass** das Nutzlastmodul eine mit der elektrischen, mechanischen, thermischen und/oder Daten-Schnittstelle der Robotereinrichtung (100) korrespondierende elektrische, mechanische, thermische und/oder Daten-Schnittstelle aufweist.

11. Nutzlastmodul nach wenigstens einem der Ansprüche 8-10, **dadurch gekennzeichnet, dass** das Nutzlastmodul eine standardisierte Linearführung, eine standardisierte Verriegelungseinrichtung und/oder eine standardisierte elektrische, mechanische, thermische und/oder Daten-Schnittstelle aufweist.

## Claims

1. Mobile robot device (100) comprising a chassis and at least one actuator (104, 106, 108, 110) for moving the chassis, wherein by means of the chassis a payload module can be picked up and/or set down and by means of the at least one actuator (104, 106, 108, 110) the chassis can be moved for picking up and/or setting down the payload module, **characterised in that** the chassis forms a central body (102) of the robot device (100), the central body (102) has U-shaped form in plan view with a rear section (112) and two side sections (114, 116), the rear section (112) and the side sections (114, 116) form a mount (118) for the payload module and the chassis comprises a linear guide for mounting the payload module.

2. Robot device (100) according to claim 1, **characterised in that** the chassis can be moved in six degrees of freedom relative to an orthogonal three-dimensional coordinate system.

3. Robot device (100) according to at least one of the preceding claims, **characterised in that** the chassis can be firstly positioned and/or aligned for picking up and/or setting down the payload module and then the payload module can be picked up and/or set down by an at least approximately linear movement of the chassis.

4. Robot device (100) according to at least one of the preceding claims, **characterised in that** the chassis comprises a locking device for fixing a picked up payload module.

5. Robot device (100) according to at least one of the preceding claims, **characterised in that** the chassis comprises an electrical, mechanical, thermal and/or data interface for connecting to the payload module.

6. Robot device (100) according to at least one of the preceding claims, **characterised in that** the at least one actuator (104, 106, 108, 110) comprises at least one drivable wheel (128) which is kinematically connected to the chassis.

7. Robot device (100) according to at least one of the preceding claims, **characterised in that** the at least one actuator (104, 106, 108, 110) is configured to be leg-like with at least two joints (120, 126).

8. Payload module for use with a robot device (100) according to at least one of the preceding claims, **characterised in that** the payload module comprises a linear guide corresponding with the linear guide of the chassis and the payload module can thus be picked up by an at least approximately linear movement of the robot device (100) in the mount (118) of the chassis and/or can be set down from the mount (118) of the chassis.

9. Payload module according to claim 8, **characterised in that** the payload module comprises a locking device corresponding with the locking device of the robot device (100).

10. Payload module according to at least one of claims 8-9, **characterised in that** the payload module comprises an electrical, mechanical, thermal and/or data interface corresponding with the electrical, mechanical, thermal and/or data interface of the robot device (100).

11. Payload module according to at least one of claims 8-10, **characterised in that** the payload module comprises a standardised linear guide, a standardised locking device and/or a standardised electrical, mechanical, thermal and/or data interface.

## Revendications

1. Dispositif robotisé mobile (100) présentant un châssis et au moins un actionneur (104, 106, 108, 110) pour déplacer le châssis, un module de charge utile pouvant être reçu et/ou retiré à l'aide du châssis et le châssis pouvant être déplacé à l'aide dudit au moins un actionneur (104, 106, 108, 110) pour recevoir et/ou retirer le module de charge utile, **caractérisé en ce que** le châssis forme un corps central (102) du dispositif robotisé (100), le corps central (102) présentant la forme d'un U en vue de dessus avec un tronçon dorsal (112) et deux tronçons en forme de branches (114, 116), le tronçon dorsal (112) et les deux tronçons en forme de branches (114, 116) formant un logement (118) pour le module de charge utile et le châssis présentant un guidage linéaire pour recevoir le module de charge utile.

2. Dispositif robotisé (100) selon la revendication 1, **caractérisé en ce que** le châssis peut être déplacé suivant six degrés de liberté par rapport à un système de coordonnées tridimensionnelles orthogonales.

3. Dispositif robotisé (100) selon au moins l'une des revendications précédentes, **caractérisé en ce que** le châssis pour recevoir et/ou déposer le module de charge utile peut être tout d'abord positionné et/ou orienté et ensuite le module de charge utile peut être reçu et/ou retiré par un mouvement au moins approximativement linéaire du châssis.

4. Dispositif robotisé (100) selon au moins l'une des revendications précédentes, **caractérisé en ce que** le châssis comprend un dispositif de verrouillage pour fixer un module de charge utile reçu.

5. Dispositif robotisé (100) selon au moins l'une des revendications précédentes, **caractérisé en ce que** le châssis présente une interface électrique, mécanique, thermique et/ou de données pour le raccordement avec le module de charge utile.

6. Dispositif robotisé (100) selon au moins l'une des revendications précédentes, **caractérisé en ce que** ledit au moins un actionneur (104, 106, 108, 110) présente au moins une roue (128) pouvant être entraînée qui est reliée de manière cinématique au châssis.

7. Dispositif robotisé (100) selon au moins l'une des revendications précédentes, **caractérisé en ce que** ledit au moins un actionneur (104, 106, 108, 110) est réalisé en forme de jambe avec au moins deux articulations (120, 126).

8. Module de charge utile destiné à être utilisé avec un dispositif robotisé (100) selon au moins l'une des revendications précédentes, **caractérisé en ce que** le module de charge utile présente un guidage linéaire correspondant au guidage linéaire du châssis et le module de charge utile peut ainsi être reçu par un mouvement au moins approximativement linéaire du dispositif robotisé (100) dans le logement du châssis et/ou retiré hors du logement (118) du châssis.

9. Module de charge utile selon la revendication 8, **caractérisé en ce que** le module de charge utile présente un dispositif de verrouillage correspondant au dispositif de verrouillage du dispositif robotisé (100).

10. Module de charge utile selon au moins l'une des revendications 8 à 9, **caractérisé en ce que** le module de charge utile présente une interface électrique, mécanique, thermique et/ou de données correspondant à l'interface électrique, thermique et/ou de données du dispositif robotisé (100).

11. Module de charge utile selon au moins l'une des revendications 8 à 10, **caractérisé en ce que** le module de charge utile présente guidage linéaire normalisé, un dispositif de verrouillage normalisé et/ou une interface électrique, mécanique, thermique et/ou data normalisée.
